# EUROPEAN PATENT APPLICATION

(11) **EP 1 850 558 A1**
(43) Date of publication of application: **31.10.2007**
(21) Application number: 05765488.1
(22) Date of filing: 07.07.2005
(51) Int. Cl.: H04L 29/10

(54) **DATA PROCESSING DEVICE**

(30) Priority: 18.02.2005 JP 2005042755
(71) Applicant: Duaxes Corporation, Tokyo 100-6014 (JP)
(72) Inventor: NAGOYA, Mitsugu, 1730003 (JP)
(74) Representative: Palmer, Jonathan R.
(86) International application number: PCT/JP2005/012605
(87) International publication number: WO 2006/087832

(57) **Abstract**

A technology for achieving a high-speed data processing apparatus is provided. The communication control apparatus 10 includes a communication control section 2 on the receiving side, a packet processing circuit 20, and a communication control section 4 on the sending side. The communication control sections 2 and 4 have respective PHY processing sections 5a and 5b which process the physical layer of packets, and respective MAC processing sections 6a and 6b which process the MAC layer of the packets. The packet processing circuit 20 is composed of wired logic circuits, and performs filtering and other processing according to data included in the packets. The processing is executed by the dedicated hardware circuit without requiring a CPU or an OS.

## Description

### Technical Field

The present invention relates to a data processing technology, and in particular to a data processing apparatus which processes communication data.

### Background Art

With improved Internet infrastructures and the recent widespread use of communication terminals such as cellular phone terminals, personal computers, and VoIP (Voice over Internet Protocol) phone sets, the number of Internet users has been increasing explosively. Under these circumstances, security problems such as computer viruses, cracking, and spam mails have become apparent, requiring appropriate technologies for communication control. These improved communication environments entail enormous traffic, with a growing need for communication control apparatuses that process large volumes of data at high speed.

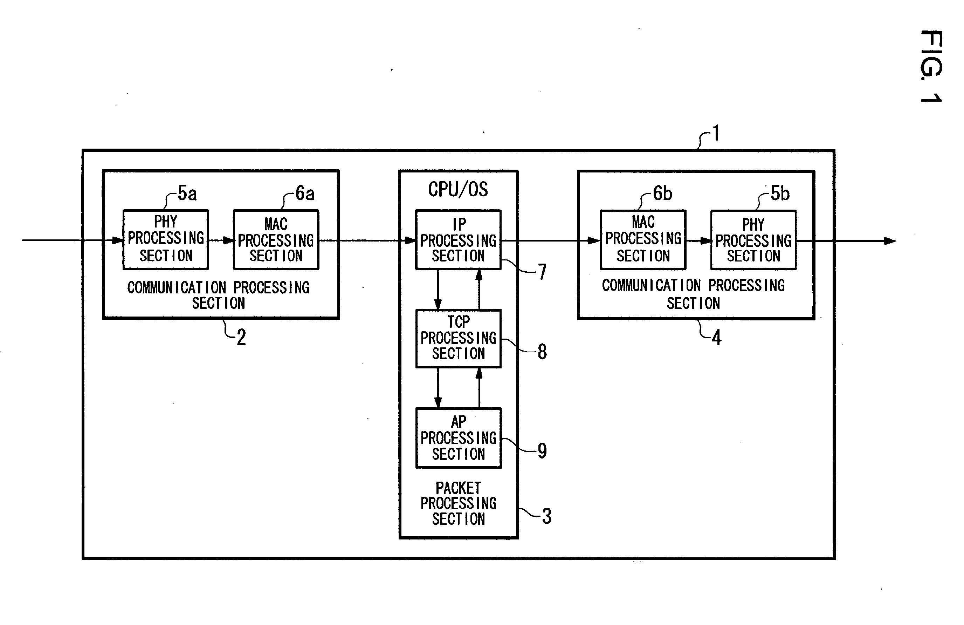

Fig. 1 shows the configuration of a conventional communication control apparatus 1. The conventional communication control apparatus 1 includes a communication control section 2 on the receiving side, a packet processing section 3, and a communication control section 4 on the sending side. The communication control sections 2 and 4 include PHY processing sections 5a and 5b and MAC processing sections 6a and 6b, respectively. The PHY processing sections 5a and 5b process the physical layer of packets. The MAC processing sections 6a and 6b process the MAC layer of the packets. The packet processing section 3 includes protocol processing sections which perform protocol-specific processing, and an AP processing section 9 which processes the application layer. The protocol processing sections include an IP processing section 7 which performs IP (Internet Protocol) processing, and a TCP processing section 8 which performs TCP (Transport Control Protocol) protocol processing. The AP processing section 9 performs filtering and other processing according to the data included in the packets.
[Patent Document 1]
Japanese Patent Application Laid-open No. H4-180425

### Disclosure of Invention

### [Problems to be Solved by the Invention]

In the conventional communication control apparatus 1, the packet processing section 3 has been implemented with software, using a general-purpose processor, or CPU, and an OS running on the CPU. In such a configuration, however, the performance of the communication control apparatus 1 depends on the performance of the CPU. A communication control apparatus capable of processing a large volume of packets at high speed can therefore only be achieved to a limited extent. For example, the maximum amount of data a 64-bit CPU can process at one time is 64 bits, and there has accordingly been no communication control apparatus with a higher performance than this. In addition to this, since the conventional communication control apparatus is predicated on the presence of an OS which has general-purpose functions, it has been impossible to prevent the possibility of security holes. This has made maintenance work such as OS upgrades necessary.

The present invention has been made in view of the foregoing circumstances. It is thus a general purpose of the present invention to provide a technology for achieving a high-speed data processing apparatus.

### [Means for Solving the Problems]

One embodiment of the present invention relates to a data processing apparatus. This data processing apparatus includes: a first memory unit which contains reference data to be referred to when determining contents of processing to be performed on acquired data; a search section which searches the data for the reference data by comparing the data and the reference data; a second memory unit which stores a result of search obtained by the search section and the contents of processing in association with each other; and a processing section which performs the contents of processing associated with the result of search on the data based on the result of search. The search section is composed of a wired logic circuit.

The search section or processing section may be implemented using an FPGA (Field Programmable Gate Array). Since the search section comprises a dedicated hardware circuit, it is possible to achieve a data processing apparatus having a desired performance without being constrained by CPU performance.

The wired logic circuit may include a plurality of first comparison circuits which compare the data with the reference data bit by bit. For example, 64 or more first comparison circuits may be provided to achieve a circuit that can compare a greater number of bits at one time than a CPU can.

The search section may include a position detection circuit which detects in the communication data a position of comparison target data to be compared with the reference data. The position detection circuit may include a plurality of second comparison circuits which compare the data with position identification data for the comparison target data. The plurality of second comparison circuits may receive the communication data, each having a shift of a predetermined data length, and compare it with the position identification data simultaneously in parallel. Since the provision of the plurality of second comparison circuits makes it possible to evaluate a plurality of positions simultaneously, it is possible to detect the position of the comparison target data at higher speed.

The search section may include a binary search circuit which searches the communication data for the reference data by binary search. When the number of pieces of data storable in the first memory unit is smaller than the number of pieces of the reference data, the reference data may be stored in the first memory unit in descending order from the last data position, while 0 is stored in the rest of the data. This makes it possible to skip to the next binary search without making a comparison if the reference data is 0. Binary searches can thus be performed at higher speed.

The search section may include a determination circuit which determines which range the comparison target data to be compared with the reference data pertains to, out of three or more ranges into which the plurality of pieces of reference data stored in the first memory unit are divided. The determination circuit may include a plurality of third comparison circuits which compare reference data at borders of the ranges with the comparison target data so that the plurality of third comparison circuits determine which of the three or more ranges the comparison target data pertains to simultaneously in parallel. As the range can be identified before binary searching, the search speed improves. The reference data stored in predetermined positions of the first memory unit may be input to the third comparison circuits as the reference data at the borders. If the reference data at the borders can be set automatically, it is possible to start processing immediately even if the contents of the first memory unit are changed.

The ranges may be determined depending on a distribution of frequencies of occurrence of the reference data in the communication data. This can further improve the search efficiency for even faster search.

The first memory unit may further contain information that indicates the position of the comparison target data in the communication data. The search section may extract the comparison target data based on the position-indicating information. It is therefore possible to set the comparison target data more flexibly for improved search efficiency.

The first memory unit and the second memory unit may be configured to be rewritable from outside. Consequently, the reference data, the contents of processing, and the like can be adjusted to adapt the data processing apparatus for various types of data processing.

When the search section acquires data in a communication packet to be compared with the reference data, it may start comparing the data and the reference data without waiting for all data in the communication packet to be acquired. This can reduce the time required for processing. As well as the comparison processing, other processing of the search section may similarly be started without waiting for complete acquisition of data.

Another embodiment of the present invention relates to a data processing apparatus. This data processing apparatus comprises a plurality of any of the foregoing data processing apparatuses. The data processing apparatuses each have two interfaces which input and output data from/to communication lines. The interfaces are individually switched between input and output, thereby controlling the direction of processing of the data. When any one of the data processing apparatuses becomes inoperable, the other data processing apparatus(es) can be operated instead. This can improve fault tolerance. Moreover, when any one of the data processing apparatuses is stopped for maintenance or the like, the other data processing apparatus(es) can be operated instead. Maintenance can thus be performed without stopping operation. Furthermore, since the directions of flow of data to be processed by the respective data processing apparatuses can be changed depending on the traffic status or the like, it is possible to cope with variations in traffic appropriately.

It should be appreciated that any combinations of the foregoing components, and any conversions of expressions of the present invention from/into methods, apparatuses, systems, recording media, computer programs, and the like are also intended to constitute applicable aspects of the present invention.

### [Advantages]

According to the present invention, it is possible to provide a technology for achieving a high-speed data processing apparatus.

### Brief Description of the Drawings

Fig. 1 is a diagram showing the configuration of a conventional communication control apparatus;
Fig. 2 is a diagram showing the configuration of a communication control apparatus according to an embodiment of the present invention;
Fig. 3 is a diagram showing the configuration of a packet processing circuit;
Fig. 4 is a diagram showing the configuration of a position detection circuit;
Fig. 5 is a diagram showing an example of internal data of a first database;
Fig. 6 is a diagram showing another example of the internal data of the first database;
Fig. 7 is a diagram showing yet another example of the internal data of the first database;
Fig. 8 is a diagram showing the configuration of comparison circuits included in a binary search circuit;
Fig. 9 is a diagram showing an example of internal data of a second database;
Fig. 10 is a diagram showing another example of the internal data of the second database; and
Fig. 11 is a diagram showing another example of configuration of the communication control apparatus according to the embodiment.

### Reference Numerals

10 communication control apparatus, 12 communication control unit, 14 switch control section, 20 packet processing circuit, 30 search circuit, 32 position detection circuit, 33 comparison circuit, 34 index circuit, 35 comparison circuit, 36 binary search circuit, 40 processing execution circuit, 50 first database, and 60 second database.

### Best Mode for Carrying Out the Invention

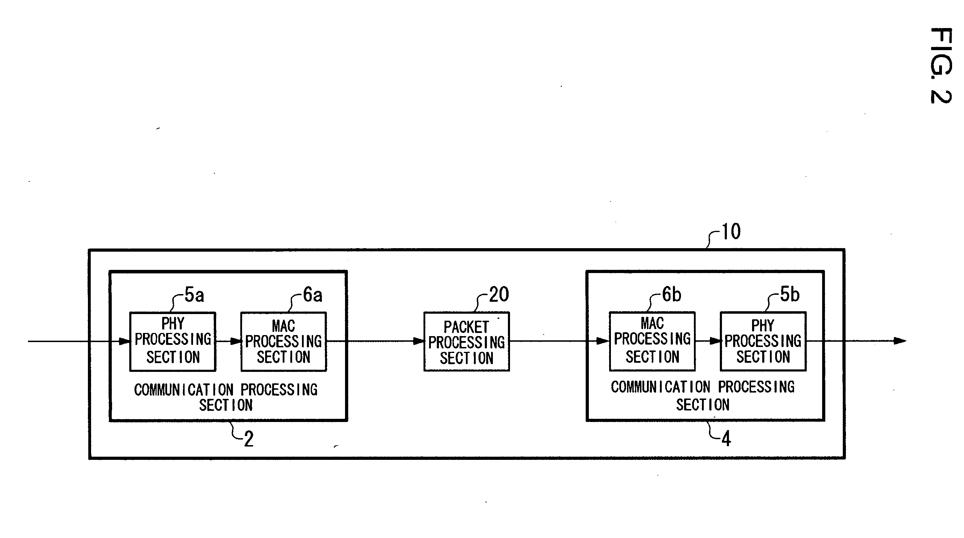

Fig. 2 shows the configuration of a communication control apparatus which is an example of the data processing apparatus of the present invention. The communication control apparatus 10 according to the present embodiment includes a packet processing circuit 20 instead of the packet processing section 3 of the conventional communication control apparatus 1 shown in Fig. 1. While the packet processing section 3 has been implemented by software including an OS and a CPU, the packet processing circuit 20 comprises dedicated hardware consisting of wired logic circuits. That is, instead of processing communication data using an OS and software which run on a CPU, which is a general-purpose processing circuit, a hardware circuit is provided which is dedicated to processing communication data. This makes it possible to overcome performance limitations ascribable to the CPU, OS, and the like, and achieve a communication control apparatus having high throughput.

Take, for example, the case of performing packet filtering or the like, where the data included in packets is searched for reference data which serves as a criterion for filtering. If CPUs are used to compare the communication data with the reference data, they can only make a comparison of 64 bits at a time at best. There has accordingly been a problem that the processing speed cannot be improved beyond the performance of the CPU. Since the CPUs must repeat the processes of loading 64 bits of communication data into a memory, comparing it with the reference data, and then loading the next 64 bits into the memory, the memory load time causes a bottleneck which limits the processing speed.

By contrast, according to the present embodiment, the dedicated hardware circuit composed of wired logic circuits is provided specifically for the purpose of comparing the communication data with the reference data. This circuit includes a plurality of comparators arranged in parallel so that a comparison can be made in a data length greater than 64 bits, such as a data length of 1024 bits. The provision of such dedicated hardware makes it possible to perform bit matching on a large number of bits simultaneously in parallel. Since the processing capability can be improved from that of the conventional CPU-based communication control apparatus 1, or 64 bits at a time, to 1024 bits at a time, the processing speed improves dramatically. Increasing the number of comparators can improve the throughput, however, it also increases cost and size. Optimal hardware circuits may thus be designed with consideration for the desired throughput, cost, size, etc.

Moreover, since the communication control apparatus 10 according to the present embodiment comprises dedicated hardware consisting of wired logic circuits, it does not require any OS (Operating System). This can eliminate the need for such operations as OS installation, bug fix, and upgrading, thereby reducing the cost and man-hours required for administration and maintenance. Unlike CPUs which require all-purpose functionality, the communication control apparatus 10 does not include any unnecessary functions or use unnecessary resources. This means reduced cost, a smaller circuit area, improved processing speed, and the like. Furthermore, again unlike conventional OS-based communication control apparatuses, the absence of unnecessary functions decreases the possibility of security holes and thus enhances the tolerance against attacks from malicious third parties over a network.

The conventional communication control apparatus 1 processes packets with software which is predicated on a CPU and an OS. It is therefore necessary that all packet data be received before performing protocol processing and passing the data to an application. In contrast, according to the communication control apparatus 10 of the present embodiment, all the packet data need not be received before starting processing because the processing is performed by a dedicated hardware circuit. Consequently, it is possible to start processing at any point in time without waiting for subsequent data if the data necessary for the processing is received. For example, position detection processing in a position detection circuit to be described later may be started at the time when position identification data for comparison target data is received. As detailed above, since various types of processing may be performed without waiting for the complete reception of data, it is possible to reduce the time required for processing packet data.

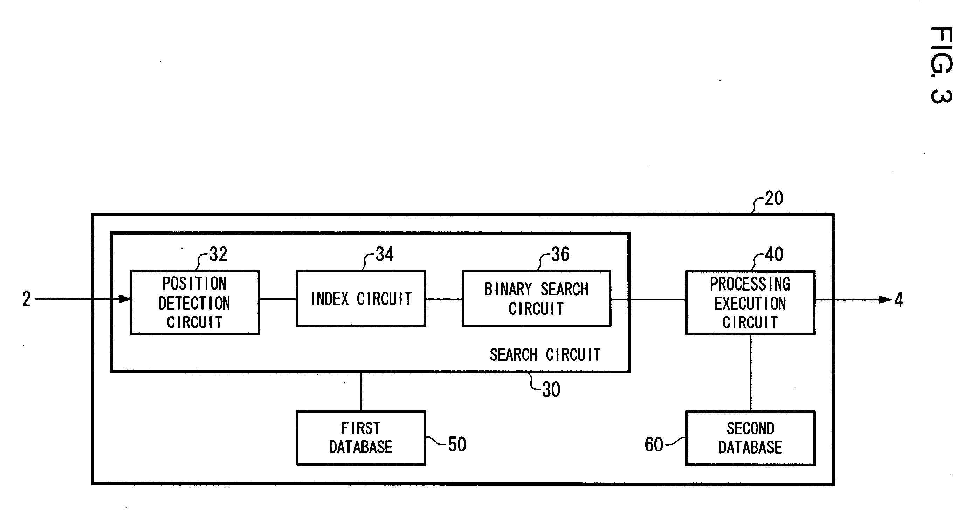

Fig. 3 shows the internal configuration of the packet processing circuit. The packet processing circuit 20 includes a search circuit 30, a processing execution circuit 40, a first database 50, and a second database 60. The first database 50 contains reference data to be referred to when determining the contents of processing to be performed on communication data. The search circuit 30 searches received communication data for the reference data by comparing the two. The second database 60 stores the result of the search by the search circuit 30 and the contents of processing to be performed on the communication data in association with each other. The processing execution circuit 40 processes the communication data based on the result of the search by the search circuit 30 and conditions stored in the second database 60.

The search circuit 30 includes a position detection circuit 32, an index circuit 34, and a binary search circuit 36. The position detection circuit 32 detects the position of comparison target data in the communication data to be compared with the reference data. The index circuit 34 is an example of a determination circuit which determines which range the comparison target data pertains to, out of three or more ranges into which the reference data in the first database 50 is divided. The binary search circuit 36 then searches the determined range for a piece of reference data that matches the comparison target data. The reference data may be searched for the comparison target data using any search technique. The present embodiment uses a binary search method.

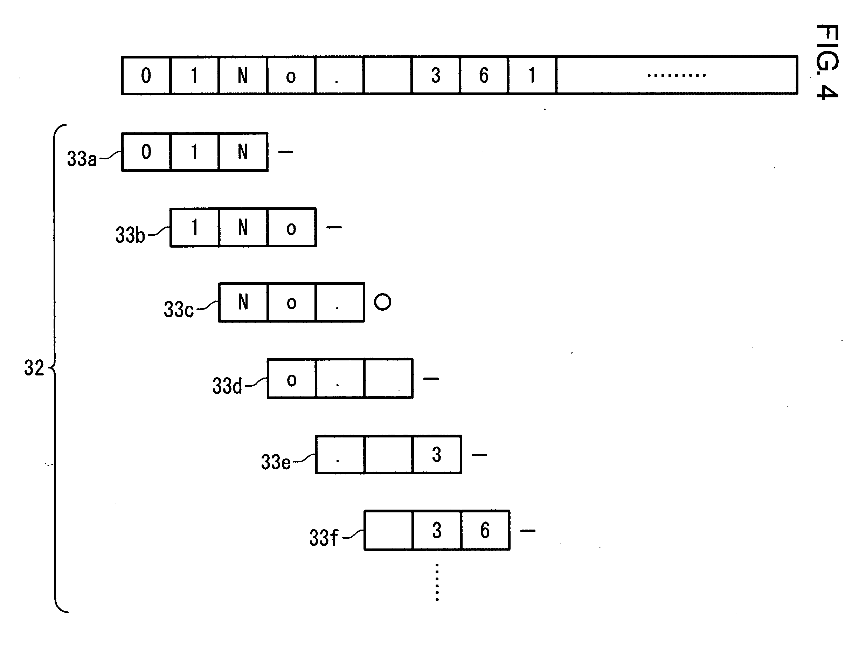

Fig. 4 shows the internal configuration of the position detection circuit. The position detection circuit 32 includes a plurality of comparison circuits 33a to 33f which compare the communication data with position identification data for identifying the position of the comparison target data. While six comparison circuits 33a to 33f are provided here, the number of comparison circuits is arbitrary as will be described. The comparison circuits 33a to 33f receive pieces of communication data in a series, with each piece shifted from the preceding one by a predetermined data length, such as 1 byte. Then, the plurality of these comparison circuits 33a to 33f simultaneously compare the position identification data to be detected with the communication data in parallel.

In the present embodiment, the operation of the communication control apparatus 10 will be described for the case of performing the following processing: detecting a character string "No. ###" in the communication data; comparing the numeral "###" included in the character string with the reference data; allowing the packet to pass if the numeral matches the reference data; and discarding the packet if not.

In the example of Fig. 4, in order to detect position identification data "No." for identifying the position of the numeral "###" in the communication data, the communication data "01No. 361..." is input to the comparison circuits 33a to 33f with a shift of one character each. More specifically, "01N" is input to the comparison circuit 33a, "1No" to the comparison circuit 33b, "No." to the comparison circuit 33c, "o. " to the comparison circuit 33d, ". 3" to the comparison circuit 33e, and "36" to the comparison circuit 33f. At this point, the comparison circuits 33a to 33f simultaneously perform comparisons with the position identification data "No.". As a result, the comparison circuit 33c makes a hit, detecting that the character string "No." is found at the third character from the top of the communication data. Consequently, it is determined that the numeral data, or comparison target data, is found subsequent to the position identification data "No." which is detected by the position detection circuit 32.

If the same processing is performed by a CPU, a comparison is initially made between character strings "01N" and "No.", followed by character strings "1No" and "No.". Since the comparison processing must be performed in steps of a single character from the top in succession, it is impossible to improve the detection speed. By contrast, in accordance with the communication control apparatus 10 of the present embodiment, the provision of the plurality of comparison circuits 33a to 33f in parallel allows simultaneous parallel comparison processing which has been impossible to perform with a CPU. This can improve the processing speed significantly. The more comparison circuits there are, the more positions can be simultaneously compared and the more the detection speed is improved. In consideration of cost, size and the like, however, only as many comparison circuits should be provided as are sufficient to achieve a desired detection speed.

Aside from detecting the position identification data, the position detection circuit 32 may also be used as a general-purpose circuit for detecting a character string. Moreover, the position detection circuit 32 may be configured to detect the position identification data in units of bits, not just in a character string.

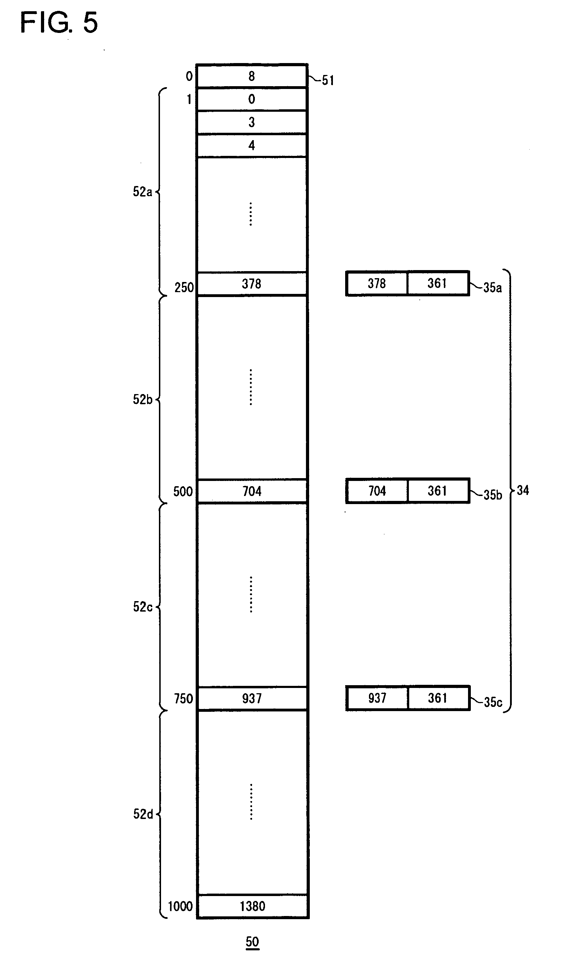

Fig. 5 shows an example of internal data in the first database. The first database 50 contains reference data to be referred to when determining the contents of processing on packets, such as filtering, routing, switching, and replacement. The pieces of reference data are sorted by some kind of sort condition when stored. In the example of Fig. 5, 1000 pieces of reference data are stored.

The top record of the first database 50 contains an offset 51 which shows the position of comparison target data in the communication data. For example, in a TCP packet, the data configuration within the packet is determined in units of bits. Thus, if the position of flag information or the like for determining the contents of processing on the packet is given in the form of the offset 51, the contents of processing can be determined by comparing necessary bits only. This allows an improvement in the processing efficiency. In addition to this, even if the packet data configuration is changed, the offset 51 can be modified accordingly. The first database 50 may store the data length of the comparison target data. It is therefore possible to operate only a required number of comparators for comparison, thereby improving the search efficiency.

The index circuit 34 determines which range the comparison target data pertains to, out of three or more ranges 52a to 52d into which the reference data in the first database 50 is divided. In the example of Fig. 5, the 1000 pieces of reference data are divided into four ranges 52a to 52d, i.e., 250 pieces each. The index circuit 34 includes a plurality of comparison circuits 35a to 35c which compare the pieces of reference data on the borders of the respective ranges with the comparison target data. Since the comparison circuits 35a to 35c compare the comparison target data with the reference data at the borders simultaneously in parallel, it is possible to determine which range the comparison target data pertains to by a single operation of comparison processing.

The pieces of reference data at the borders to be input to the comparators 35a to 35c of the index circuit 34 may be set by an apparatus that is provided outside the communication control apparatus 10. Alternatively, reference data in predetermined positions in the first database 50 may be input automatically in advance. In the latter case, the reference data in the predetermined positions of the first database 50 are automatically input to the comparison circuits 35a to 35c even while the first database 50 is being updated. This makes it possible to perform the communication control processing immediately without requiring initialization or the like.

As mentioned previously, CPU-based binary search cannot make a plurality of comparisons at the same time. In the communication control apparatus 10 according to the present embodiment, the provision of the plurality of comparison circuits 35a to 35c in parallel allows simultaneous parallel comparison processing with a significant improvement in search speed.

After the index circuit 34 determines the relevant range, the binary search circuit 36 performs searching using a binary search method. The binary search circuit 36 divides the range determined by the index circuit 34 further into two, and compares the piece of reference data lying in the border position with the comparison target data, thereby determining which range the comparison target data pertains to. The binary search circuit 36 includes a plurality of comparison circuits for comparing the reference data with the comparison target data bit by bit. For example, in the present embodiment, 1024 comparison circuits are included to perform 1024 bits of bit matching simultaneously. When it is determined which of the two split ranges the comparison target data pertains to, the determined range is further divided into two. Then, the reference data lying in the border position is read and compared with the comparison target data. Subsequently, this processing is repeated to narrow the range further until reference data that matches the comparison target data is found.

The operation will now be described in more detail in conjunction with the foregoing example. With the communication data shown in Fig. 4, the comparison target data that follows the position identification data "No." is the numeral "361". Since a single space character is interposed between the position identification data "No." and the comparison target data "361", the offset 51 is set to "8" bits in order to exclude this space from the comparison target data. The binary search circuit 36 skips the communication data subsequent to the position identification data "No." by "8" bits, or 1 byte, and reads the succeeding "361" as the comparison target data.

The comparison circuits 35a to 35c of the index circuit 34 receive "361" as the comparison target data. For reference data, the comparison circuit 35a receives "378" which lies at the border between the ranges 52a and 52b. The comparison circuit 35b receives reference data "704" which lies at the border between the ranges 52b and 52c. The comparison circuit 35c receives reference data "937" which lies at the border between the ranges 52c and 52d. The comparison circuits 35a to 35c make comparisons simultaneously, determining that the comparison target data "361" pertains to the range 52a. Subsequently, the binary search circuit 36 searches the reference data for the comparison target data "361".

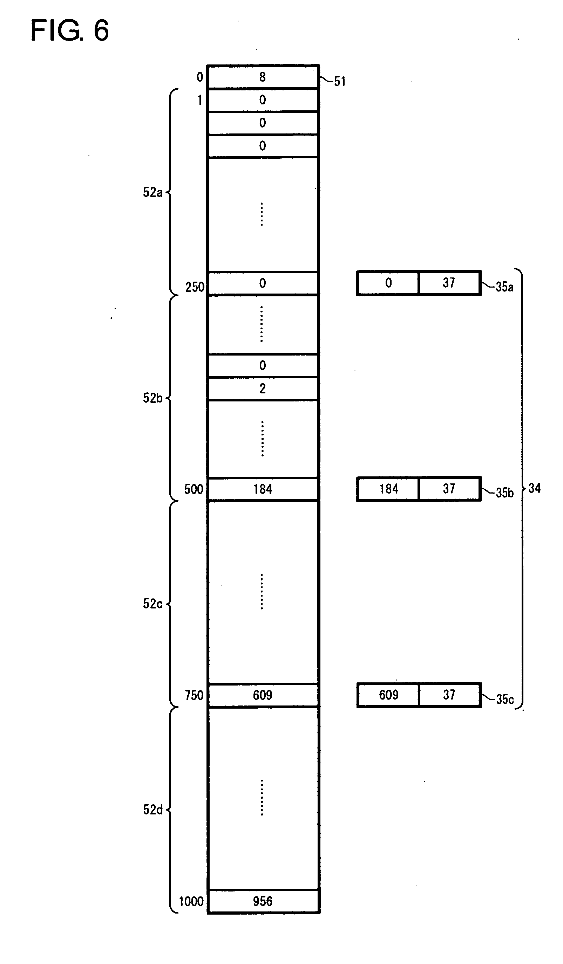

Fig. 6 shows another example of the internal data in the first database. In the example shown in Fig. 6, the number of pieces of reference data is smaller than the number of pieces of data storable in the first database 50, or 1000 in this case. In this instance, the first database 50 stores the pieces of reference data in descending order from the last data position. Then, 0 is stored in the rest of the data positions. Since the database is loaded with data not from the top but from the bottom of the loading area, and all the leading vacancies in the loading area, if any, are replaced with zero, the database is fully loaded all the time. This makes the maximum time necessary for a binary search constant. Moreover, if the binary search circuit 36 reads reference data "0" during a search, it can identify the range without making a comparison and skip to the next comparison since the result of comparison is obvious. This allows an improvement in the search speed.

In CPU-based software processing, the first database 50 contains pieces of reference data in ascending order from the first data position. For the rest of data, a maximum value will be stored, for example. In this case, it is impossible to skip comparison processing during a binary search as described above. The comparison technique described above can be implemented because the search circuit 30 comprises a dedicated hardware circuit.

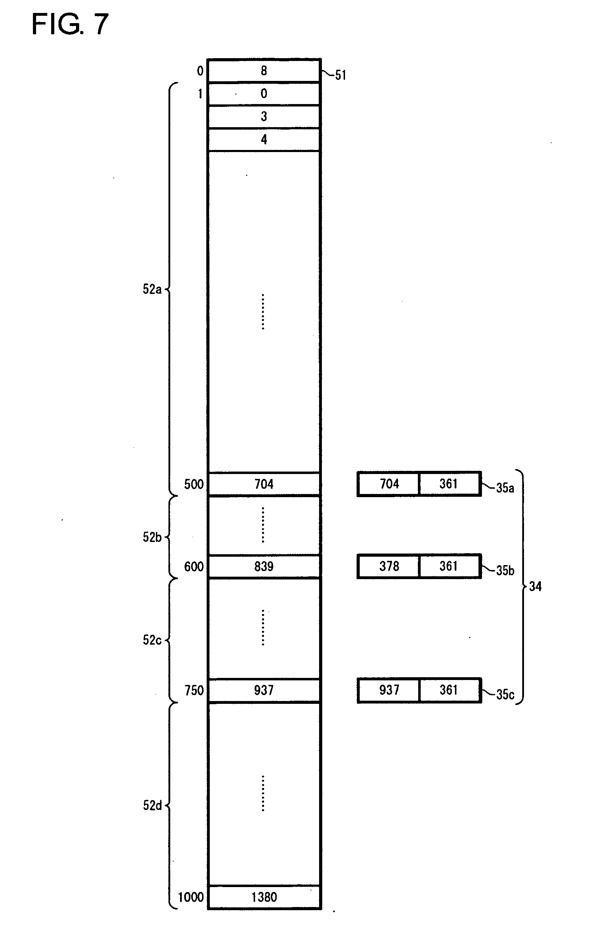

Fig. 7 shows yet another example of the internal data in the first database. In the example shown in Fig. 7, the reference data is not evenly divided into three or more ranges, but unevenly into ranges of different numbers of pieces of reference data, such as 500 pieces in the range 52a and 100 pieces in the range 52b. These ranges may be determined depending on the distribution of the frequencies of occurrence of reference data in the communication data. That is, the ranges may be determined so that the sums of the frequencies of occurrence of reference data pertaining to the respective ranges are almost the same. This allows an improvement in search efficiency. The reference data to be input to the comparison circuits 35a to 35c of the index circuit 34 may be capable of modification from outside the communication control apparatus 10. This makes it possible to set the ranges dynamically for optimized search efficiency.

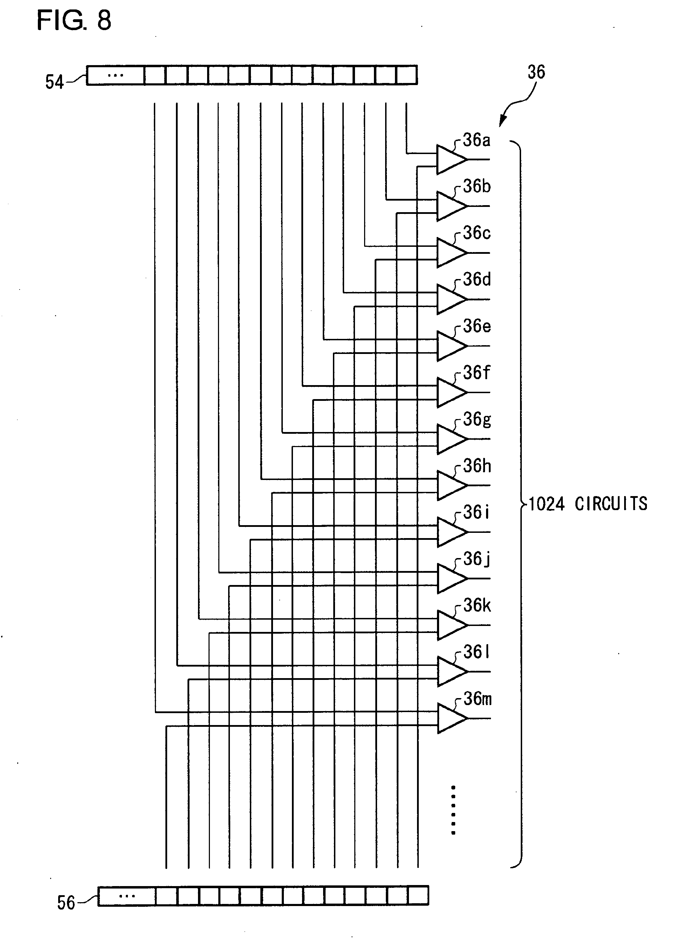

Fig. 8 shows the configuration of the comparison circuits included in the binary search circuit. As mentioned previously, the binary search circuit 36 includes 1024 comparison circuits 36a, 36b, etc. The comparison circuits 36a, 36b, etc. receive one bit of reference data 54 and one bit of comparison target data 56 each, and compare the bits in value. The comparison circuits 35a to 35c of the index circuit 34 have the same internal configuration. Since the comparison processing is thus performed by the dedicated hardware circuit, a large number of comparison circuits can be operated in parallel to compare a large number of bits at a time. Consequently, the comparison processing can be accelerated.

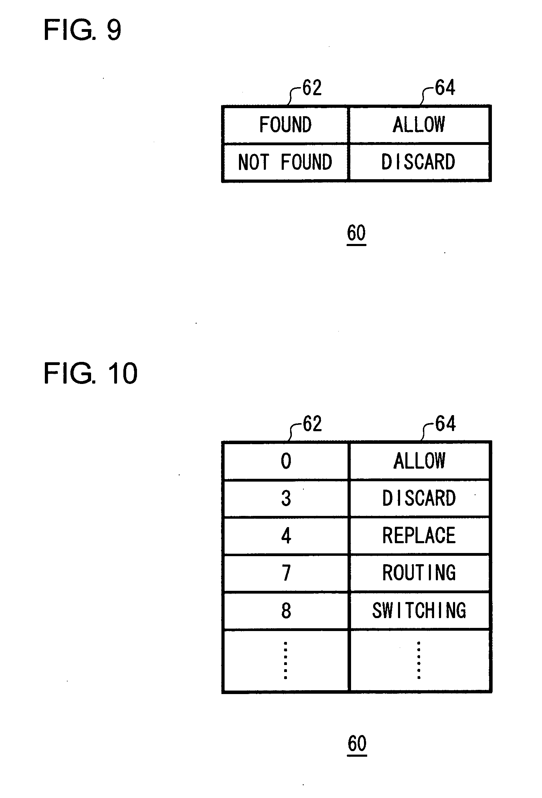

Fig. 9 shows an example of internal data in the second database. The second database 60 includes a search result field 62 in which the possible results of a search by the search circuit 30 are stored, and a processing content field 64 in which the contents of processing to be performed on communication data are stored. The results of the search and the contents of processing are retained in association with each other. In the example of Fig. 9, a condition is established whereby a packet is allowed to pass if its communication data contains the reference data, and is discarded if not. The processing execution circuit 40 searches the second database 60 for the contents of processing based on a result of search, and performs the processing on the communication data. The processing execution circuit 40 may also be implemented with wired logic circuits.

Fig. 10 shows another example of the internal data in the second database. In the example of Fig. 10, the contents of processing are set with respect to each piece of reference data. For packet replacement, data to be replaced with may be stored in the second database 60. For packet routing or switching, information as to the route may be stored in the second database 60. According to a result of the search undertaken by the search circuit 30, the processing execution circuit 40 performs processing such as filtering, routing, switching, and replacement which is recorded in the second database 60. If the contents of processing are set with respect to each piece of reference data as in Fig. 10, the first database 50 and the second database 60 may be integrated with each other.

The first database and the second database are configured to be rewritable from outside the communication control apparatus. These databases can be replaced to achieve various types of data processing and communication control using the same communication control apparatus 10. Moreover, two or more databases containing reference data to be searched may be provided to perform multilevel search processing. In this instance, two or more databases containing the possible results of a search and the contents of processing in association with each other may be provided for more complicated conditional branching. When a plurality of databases are thus provided for a multilevel search, the number of the position detection circuits 32, the index circuits 34, the binary search circuits 36, and the like may be increased.

The data intended for the foregoing comparison may be compressed by the same compression logic. If both the source data and the target data to be compared are compressed by the same method, the comparison can be performed in the same manner as usual. This can reduce the amount of data to be loaded for comparison. The smaller amount of data to be loaded can reduce the time required for reading it from the memory, with a reduction in the entire processing time. The reduced sizes of the comparators can also contribute to miniaturization, weight saving, and cost reduction of the apparatus. The data intended for comparison may be stored in a compressed form, or may be read from the memory and compressed before comparison.

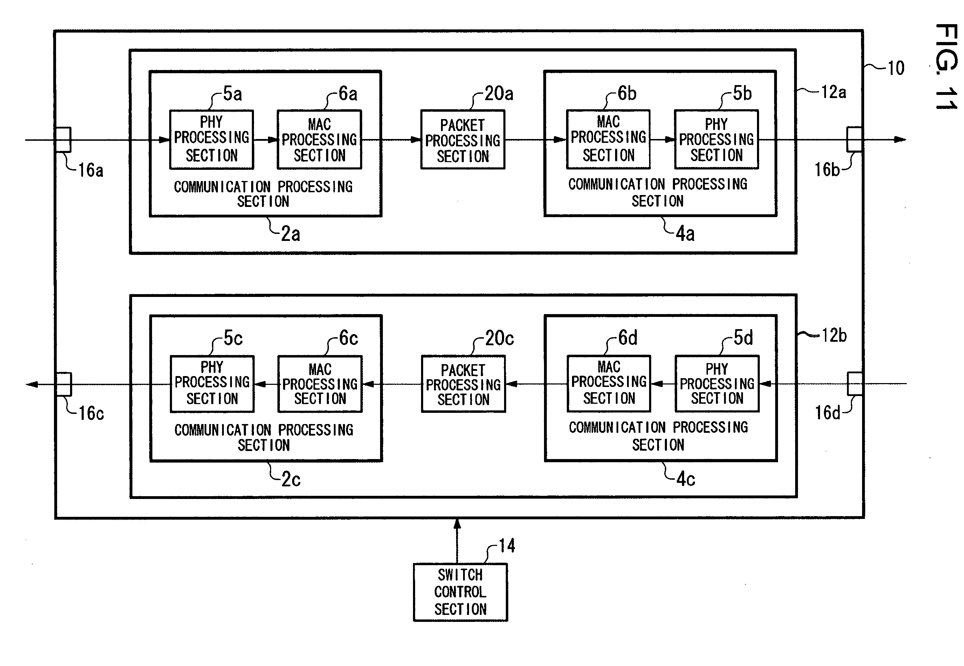

Fig. 11 shows another example of the configuration of the communication control apparatus according to the present embodiment. The communication control apparatus 10 shown in this diagram has two communication control units 12 which have the same configuration as that of the communication control apparatus 10 shown in Fig. 2. In addition to this, a switch control section 14 which controls the operation of the individual communication control units 12 is provided. The communication control units 12 have two input and output interfaces 16 each, and are connected upstream and downstream to two networks via the respective input and output interfaces 16. The communication control units 12 input communication data from either one of the networks, and output processed data to the other. The switch control section 14 switches the input and output of the input and output interfaces 16 provided in the individual communication units 12, thereby switching the directions of flow of communication data in the communication control units 12. This allows communication control not only in one direction but also in both directions.

The switch control section 14 may exercise control so that: either one of the communication control units 12 processes inbound packets and the other processes outbound packets; both process inbound packets; or both process outbound packets. Consequently, the directions of communications to be controlled can be changed, for example, depending on the traffic statuses, purposes, and the like.

The switch control section 14 may acquire the operation statuses of the respective communication control units 12, and switch the direction of communication control according to the operation statuses. Suppose, for example, that one of the communication control units 12 is in a standby state and the other communication control unit 12 is in operation. Then, if it is detected that the communication control unit 12 stops due to a failure or some other reasons, the communication control unit 12 on standby may be activated as an alternative. This can improve the fault tolerance of the communication control apparatus 10. Moreover, when one of the communication control units 12 is subjected to maintenance such as a database update, the other communication control unit 12 may be operated as an alternative. Consequently, it is possible to perform appropriate maintenance without stopping the operation of the communication control apparatus 10.

The communication control apparatus 10 may be provided with three or more communication control units 12. For example, the switch control section 14 may acquire the traffic statuses, and control the direction of communication of the respective control units 12 so that more communication control units 12 are allocated for communication control processing in a direction of higher traffic. This makes it possible to minimize a drop in the communication speed even if the traffic increases in one direction.

It should be appreciated that the plurality of communication control units 12 may share part of the communication control section 2 or 4. Part of the packet processing circuit 20 may also be shared.

Description has been made regarding the present invention with reference to the embodiments. The above-described embodiments have been described for exemplary purposes only, and are by no means intended to be interpreted restrictively. Rather, it can be readily conceived by those skilled in this art that various modifications may be made by making various combinations of the aforementioned components or processes, which are also encompassed in the technical scope of the present invention.

### Industrial Applicability

The present invention may be applied to a data processing apparatus which processes communication data and the like.

## Claims

1. A data processing apparatus comprising:
a first memory unit which contains reference data to be referred to when determining contents of processing to be performed on acquired data;
a search section which searches the data for the reference data by comparing the data and the reference data;
a second memory unit which stores a result of search obtained by the search section and the contents of processing in association with each other; and
a processing section which performs the processing associated with the result of search on the data based on the result of search, wherein
the search section is composed of a wired logic circuit.

2. The data processing apparatus according to claim 1, wherein the wired logic circuit includes a plurality of first comparison circuits which compare the data with the reference data bit by bit.

3. The data processing apparatus according to claim 1, wherein the search section includes a position detection circuit which detects in the data a position of comparison target data to be compared with the reference data.

4. The data processing apparatus according to claim 3, wherein the position detection circuit includes a plurality of second comparison circuits which compare the data with position identification data for the comparison target data, and wherein the plurality of second comparison circuits receive the data, each having a shift of a predetermined data length, and compares it with the position identification data simultaneously in parallel.

5. The data processing apparatus according to any one of claims 1 to 4, wherein the search section includes a binary search circuit which searches the data for the reference data by binary search.

6. The data processing apparatus according to claim 5, wherein, when the number of pieces of data storable in the first memory unit is smaller than the number of pieces of the reference data, the reference data is stored in the first memory unit in descending order from the last data position, while 0 is stored in the rest of the data.

7. The data processing apparatus according to any one of claims 1 to 6, wherein the search section includes a determination circuit which determines which range the comparison target data to be compared with the reference data pertains to, out of three or more ranges into which the plurality of pieces of reference data stored in the first memory unit are divided.

8. The data processing apparatus according to claim 7, wherein the determination circuit include a plurality of third comparison circuits which compare reference data at borders of the ranges with the comparison target data so that the plurality of third comparison circuits determine which of the three or more ranges the comparison target data pertains to simultaneously in parallel.

9. The data processing apparatus according to claim 8, wherein the reference data stored in predetermined positions of the first memory unit is input to the third comparison circuits as the reference data at the borders.

10. The data processing apparatus according to claim 7 or 8, wherein the ranges are determined depending on a distribution of frequencies of occurrence of the reference data in the data.

11. The data processing apparatus according to any one of claims 1 to 10, wherein the first memory unit further contain information that indicates the position of the comparison target data in the data, and wherein the search section extracts the comparison target data based on the position-indicating information.

12. The data processing apparatus according to any one of claims 1 to 11, wherein one of the first memory unit and the second memory unit is configured to be rewritable from outside.

13. The data processing apparatus according to any one of claims 1 to 12, wherein, when the search section acquires data in a communication packet to be compared with the reference data, the search section starts comparing the data and the reference data without waiting for all data in the communication packet to be acquired.

14. A data processing apparatus comprising a plurality of the data processing apparatuses according to any one of claims 1 to 13, wherein
the data processing apparatuses each have two interfaces which input and output data from/to communication lines, the interfaces being individually switched between input and output, thereby controlling the direction of processing of the data.
